# EUROPÄISCHE PATENTSCHRIFT

(11) **EP 3 814 180 B1**
(45) Veröffentlichungstag und Bekanntmachung des Hinweises auf die Patenterteilung: **03.08.2022**
(21) Anmeldenummer: 19727335.2
(22) Anmeldetag: 24.05.2019
(51) Int. Cl.: B60T 7/12

(54) **HYDRAULISCHES BREMSSYSTEM FÜR EIN FAHRZEUG MIT MINDESTENS ZWEI ACHSEN**
HYDRAULIC BRAKE SYSTEM FOR VEHICLE WITH TWO OR MORE AXLES
SYSTÈME DE FREIN HYDRAULIQUE POUR VÉHICULE AVEC AU MOINS DEUX ESSIEUX

(30) Priorität: 28.06.2018 DE 102018210538
(43) Veröffentlichungstag der Anmeldung: 05.05.2021
(73) Patentinhaber: Robert Bosch GmbH, 70442 Stuttgart (DE)
(72) Erfinder: FRIEDRICH, Thomas, 74379 Ingersheim (DE); DROTLEFF, Dirk, 71720 Oberstenfeld-Gronau (DE); KLEEMANN, Ralf, 71726 Benningen Am Neckar (DE); BRENNDOERFER, Daniel, 71638 Ludwigsburg (DE); HIENZ, Bernd, 71640 Ludwigsburg (DE)
(86) Internationale Anmeldenummer: PCT/EP2019/063478
(87) Internationale Veröffentlichungsnummer: WO 2020/001878

(56) Entgegenhaltungen:
- DE-A1- 19 926 495
- DE-A1-102012 010 562
- DE-A1-102013 224 776
- DE-A1-102013 224 783
- GB-A- 2 212 574
- US-B2- 9 776 607

## Beschreibung

Die Erfindung geht aus von einem hydraulischen Bremssystem für ein Fahrzeug mit mindestens zwei Achsen, insbesondere für ein hochautomatisiertes oder autonomes Fahrzeug, nach der Gattung des unabhängigen Patentanspruchs 1.

Aus dem Stand der Technik sind Fahrzeuge mit mindestens einer hochautomatisierten oder autonomen Fahrfunktion bekannt, welche zumindest teilweise eine tatsächliche Fahraufgabe übernehmen können. Dadurch können die Fahrzeuge hochautomatisiert oder autonom fahren, indem die Fahrzeuge beispielsweise den Straßenverlauf, andere Verkehrsteilnehmer oder Hindernisse selbständig erkennen und die entsprechenden Ansteuerbefehle im Fahrzeug berechnen sowie diese an die Aktuatoren im Fahrzeug weiterleitet, wodurch der Fahrverlauf des Fahrzeugs korrekt beeinflusst wird. Der Fahrer ist bei einem solchen hochautomatisierten oder autonomen Fahrzeug in der Regel nicht am Fahrgeschehen beteiligt. Trotzdem sind Maßnahmen und Mittel vorgesehen, die es dem Fahrer ermöglichen, jederzeit selbst in das Fahrgeschehen eingreifen zu können.

Zudem sind aus dem Stand der Technik Bremssysteme für Fahrzeuge bekannt, welche für eine Ansteuerung durch einen Fahrzeugführer mit einem hydraulischen Durchgriff ausgelegt sind. Dadurch ist bei Ausfall des Bremssystems gewährleistet, dass der Fahrer durch Betätigen des Bremspedals noch ausreichend Bremskraft auf die Räder des Fahrzeugs bringen kann. Diese Auslegung beeinflusst maßgeblich die Topologie heutiger Bremssysteme. So lässt sich beispielsweise die Größe eines Tandemhauptbremszylinders durch die Aufrechterhaltung einer guten Performance in der Rückfallebene begründen. Zudem können die Bremssysteme als sogenannte gekoppelte Bremssysteme oder Hilfskraftbremssysteme ausgeführt werden. Allerdings sind auch diese Systeme so realisiert, dass als Rückfallebene nach wie vor ein hydraulischer Durchgriff durch den Fahrer gegeben ist. Hilfskraftbremsanalagen sind für hochautomatisierte oder autonome Fahrzeuge ungeeignet, da dort während einer autonomen Fahrfunktion kein Fahrer mehr zum Verstärken da ist und das Bremssystem die Bremsenergie komplett selbstständig aufbauen muss.

Aus der US 9,776,607 B2 ist ein fehlertolerantes redundantes Bremssystem für ein Kraftfahrzeug bekannt. Das Bremssystem umfasst einen ersten Bremsensatz und einen zweiten Bremsensatz. Ein erster Hydraulikbremskreis ist mit dem ersten Bremsensatz verbunden und ein zweiter Hydraulikbremskreis ist mit dem zweiten Bremsensatz verbunden. Ferner ist ein erstes Steuermodul mit dem ersten Hydraulikbremskreis und dem zweiten Hydraulikbremskreis gekoppelt. Das erste Steuermodul ist konfiguriert, um den Fluiddruck sowohl innerhalb des ersten Hydraulikbremskreises als auch innerhalb des zweiten Hydraulikbremskreises zu steuern. Ein zweites Steuermodul ist ebenfalls mit dem ersten Hydraulikbremskreis und dem zweiten Hydraulikbremskreis gekoppelt. Das zweite Steuermodul ist konfiguriert, um einen Fluiddruck sowohl innerhalb des ersten Hydraulikbremskreises als auch innerhalb des zweiten Hydraulikbremskreises unabhängig vom ersten Steuermodul zu steuern. Das erste Steuermodul ist in Reihe mit dem zweiten Steuermodul in dem ersten und dem zweiten Hydraulikbremskreis angeordnet. Zusätzlich sendet ein virtueller Fahrer eine Verzögerungsanforderung an das erste Steuermodul und das zweite Steuermodul. Das erste Steuermodul und das zweite Steuermodul bestimmen einen gewünschten Druck basierend auf der Verzögerungsanforderung. Das erste Bremssteuermodul steuert den Fluiddruck sowohl innerhalb des ersten als auch innerhalb des zweiten Hydraulikbremskreises, um die Verzögerungsanforderung durchzuführen. Das zweite Steuermodul überwacht den Druck stromabwärts von dem ersten Steuermodul und vergleicht den überwachten Druck mit dem gewünschten Druck.

Weiterhin ist aus dem Stand der Technik die DE 10 2013 224 783 A1 bekannt. Diese Schrift betrifft ein Bremssystem für ein Kraftfahrzeug mit mindestens zwei Achsen, wobei die Räder einer Antriebsachse mit einem elektrischen Antrieb verbunden sind, der mindestens eine als Motor oder Generator betreibbare elektrische Maschine aufweist, welches einen ersten hydraulischen Bremskreis mit mindestens einer Radbremse, insbesondere zwei Radbremsen, einen vom Fahrer über ein Bremspedal betätigbaren Hauptbremszylinder, der mit den Radbremsen des ersten Bremskreises verbunden ist, einen Bremsbetätigungssensor, und einen zweiten hydraulischen Bremskreis mit mindestens einer Radbremse, insbesondere zwei Radbremsen, umfasst. Hierbei ist der zweite Bremskreis nur mit einer autonomen Druckquelle hydraulisch verbunden, wobei die Radbremsen des zweiten Bremskreises der Antriebsachse zugeordnet sind und die Radbremsen des ersten Bremskreises einer anderen Achse zugeordnet sind. Ferner betrifft die Schrift ein Verfahren zur Steuerung eines Bremssystems.

### Offenbarung der Erfindung

Das hydraulische Bremssystem für ein Fahrzeug mit mindestens zwei Achsen, insbesondere für ein hochautomatisiertes oder autonomes Fahrzeug, mit den Merkmalen des unabhängigen Patentanspruchs 1 hat den Vorteil, dass eine einfache, robuste und kostengünstige Bremssystemarchitektur ohne mechanischen und/oder hydraulischen Durchgriff über den Fahrer zur Verfügung gestellt wird, welche auch im Fehlerfall durch drei Druckerzeuger und ein geeignetes Redundanzkonzept eine ausreichende Bremsperformance ermöglicht.

Weiterhin ermöglichen Ausführungsformen des hydraulische Bremssystem für ein Fahrzeug ein erleichtertes Montagekonzept mit Vormontage der beiden Subbremssysteme an den korrespondierenden Fahrzeugachsen. Von den drei Druckerzeugern sind zwei in ein redundantes Subbremssystem in serieller Verschaltung an einer ersten Achse, vorzugsweise an einer Vorderachse implementiert. Der dritte Druckerzeuger ist in einem weiteren Subbremssystem an einer zweiten Achse, vorzugweise an einer Hinterachse implementiert. Zwischen den Subbremssystemen an den verschiedenen Achsen besteht keine hydraulische Verbindung. Als Druckerzeuger bzw. Volumenerzeuger können beispielsweise Plungersysteme, Pumpensysteme oder Pumpensysteme mit Druckspeichern eingesetzt werden. Auch elektrohydraulische Aktuatoren, wo eine elektrisch leitende Flüssigkeit durch Anlegen von Strom und einem Magnetfeld in Bewegung gesetzt werden, sind denkbar. Hierbei werden die Druckerzeuger jeweils von einem separaten Steuergerät angesteuert, wobei die Druckerzeuger des ersten Subbremssystems an unterschiedliche Bordnetze angeschlossen sind. Der dritte Druckerzeuger des zweiten Subbremssystems ist an einem weiteren Bordnetz bzw. an einem der Bordnetze angeschlossen, an welchem einer der Druckerzeuger des ersten Subbremssystems angeschlossen ist. Das Bremssystem ist als reines Brake-by-Wire System ausgestaltet, das bedeutet, dass kein mechanischer und/oder hydraulischer Durchgriff des Fahrers möglich ist und sowohl autonome Bremsanforderungen als auch Anforderungen des Fahrers rein elektrisch über einen Datenbus an das Bremssystem kommuniziert werden. Die Zweikreisigkeit des Gesamtbremssystems ist durch die vorgeschlagene Architektur mit separaten Subbremssystemen an verschiedenen Achsen gegeben.

Ausführungsformen der vorliegenden Erfindung stellen ein hydraulisches Bremssystem für ein Fahrzeug mit mindestens zwei Achsen, insbesondere für ein hochautomatisiertes oder autonomes Fahrzeug, mit mindestens zwei voneinander hydraulisch getrennten Subbremssystemen zur Verfügung. Hierbei umfasst ein erstes Subbremssystem einen ersten Bremskreis, ein Hauptsystem, welches eine erste Energieversorgung und eine erste Auswerte- und Steuereinheit aufweist, und ein Sekundärsystem, welches eine von der ersten Energieversorgung unabhängige zweite Energieversorgung und eine zweite Auswerte- und Steuereinheit aufweist, zur redundanten Druckerzeugung im ersten Bremskreis. Das erste Subbremssystem ist einer ersten Achse mit mindestens zwei Radbremsen zugeordnet. Der erste Bremskreis umfasst einen dem Hauptsystem zugeordneten ersten Druckerzeuger, einen dem Sekundärsystem zugeordneten zweiten Druckerzeuger, welche zwischen einem ersten Fluidbehälter und den mindestens zwei Radbremsen der ersten Achse hydraulisch in Reihe geschaltet sind, und eine Modulationseinheit zur hydraulischen Verbindung der Druckerzeuger mit den mindestens zwei Radbremsen und zur individuellen Bremsdruckmodulation in den mindestens zwei Radbremsen. Ein zweites Subbremssystem umfasst einen zweiten Bremskreis und ein Nebensystem, welches eine dritte Energieversorgung und eine dritte Auswerte- und Steuereinheit aufweist, zur Druckerzeugung im zweiten Bremskreis. Das zweite Subbremssystem ist einer zweiten Achse mit mindestens zwei Radbremsen zugeordnet. Der zweite Bremskreis umfasst einen dem Nebensystem zugeordneten dritten Druckerzeuger, welcher zwischen einem zweiten Fluidbehälter und den mindestens zwei Radbremsen der zweiten Achse angeordnet ist, und eine Modulationseinheit zur hydraulischen Verbindung des Druckerzeugers mit den mindestens zwei Radbremsen und zur individuellen Bremsdruckmodulation in den mindestens zwei Radbremsen.

Durch die individuelle Bremsdruckmodulation in den einzelnen Radbremsen können in vorteilhafter Weise verschiedene Regelfunktionen, wie beispielsweise eine Blockierschutzregelung ABS, eine Antriebsschlupfregelung ASR, eine Fahrdynamikregelung FDR bzw. ESP zur Längs- und Querstabilisierung des Fahrzeugs umgesetzt werden. Da diese Regelfunktionen an sich bekannt sind wird hier nicht näher auf diese eingegangen.

Ausführungsformen des Bremssystems ermöglichen und/oder unterstützen neue Fertigungskonzepte bei den Fahrzeugherstellern. Da keine hydraulischen Leitungen zwischen den Achsen durch das Fahrzeug verlaufen, ermöglichen die hydraulisch getrennten Subbremssysteme eine Bremssystemmontage schon auf dem korrespondierenden Achsmodul. Damit muss die Bremssystemmontage und die Bremssysteminbetriebnahme nicht mehr auf der besonders zeitkritischen Hauptlinie erfolgen, sondern kann auf die eine nebengeordnete "Subassembly" Linie verlegt werden. Alternativ kann auch vom Zulieferer ein komplettes Achsmodul mit befülltem Bremssystem an das Fertigungsband des Fahrzeugherstellers geliefert werden, welches dann nur noch mechanisch ins Fahrzeug integriert und elektrisch verbunden werden muss. Zudem ergeben sich Einbau- und/oder Packagingvorteile, da die Subbremssysteme kleiner und/oder leichter als ein zentrales Bremssystem sind und so leichter in den gegebenen Bauraum integriert werden können. Durch den Entfall der Bremsleitungen von vorne nach hinten wird weiterhin Bauraum frei und bei batterieelektrischen Fahrzeugen mit Batteriepack(s) wird die Montage des Batteriepacks vereinfacht. Damit ist weiterhin neben den genannten Fertigungsvorteilen auch ein einfacherer Batteriewechsel entweder im Service oder als Wechselbatterie (Batterietauschen anstatt Laden) möglich. Des Weiteren ergibt sich durch reduzierte Leitungslängen, geringeres Kreisvolumen je Subbremssystem und separate Befüllung der beiden Subbremssysteme abseits der Hauptfertigungslinie des Fahrzeuges eine Optimierung der Zeit zur hydraulischen Befüllung des Bremssystems. Außerdem das Risiko hydraulische Leitungen im Unterboden bzw. zwischen Vorderachse und Hinterachse während der Fertigung, im Fahrbetrieb oder Service zu beschädigen reduziert, so dass auch Ausfallwahrscheinlichkeiten leicht reduziert werden können.

Durch die dreifache Druckerzeugerredundanz kann nach einem Erstfehler, der zum Verlust eines Druckerzeugers oder eines Subbremssystems führt, noch eine längere autonome Weiterfahrt ermöglicht werden ("complete the mission"), da weiterhin noch Redundanz vorhanden ist.

Ausführungsformen der Erfindung weisen weniger Komponenten als bekannte Bremssysteme auf, da weniger Ventile, kürzere Bremsleitungen, kein Pedalwegsimulator, kein Mechanismus, um den Fahrerdruck zu erzeugen, zu verstärken und weiterzuleiten erforderlich sind, so dass geringere Bremssystemkosten entstehen. Zudem ergeben sich geringere Systemkosten, da an den Radbremsen nur ein hydraulischer Anschluss vorhanden ist und keine Alternativlösungen mit zwei Anschlüssen im Bremssattel erforderlich sind, die auf unterschiedliche Kolben wirken. Des Weiteren weisen die Fluidbehälter nur einen hydraulischen Anschluss pro Bremskreis auf und Alternativlösungen mit mehreren Anschlüssen sind überflüssig.

Außerdem ergeben sich geringere Integrationskosten beim Fahrzeughersteller, da die Ausführungsformen der Erfindung aufgrund der elektrischen Ansteuerung ohne mechanischen und/oder hydraulischen Durchgriff über den Fahrer einen einfachen Einbau, insbesondere für Rechts- und Linkslenker, ermöglichen und Einbauraum an der Spritzwand zwischen Motorraum und Fahrzeuginnenraum freigeben. Da keiner der Bremssystemaktuatoren an der Spritzwand montiert sein muss, können sich auch NVH-Vorteile (NVH: Noise, Vibration, Harshness "Geräusch, Vibration, Rauigkeit") ergeben. Aufgrund der kleineren Anzahl von Komponenten ergibt sich zudem ein geringeres Gewicht und Volumen im Vergleich zu bekannten Bremssystemen.

Unter der Auswerte- und Steuereinheit kann vorliegend ein elektrisches Gerät, wie beispielsweise ein Steuergerät verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Zur Erfassung der Sensorsignale sind Sensoreinheiten vorgesehen, unter welchen vorliegend Baugruppen verstanden werden, welche mindestens ein Sensorelement umfassen, welches eine physikalische Größe bzw. eine Änderung einer physikalischen Größe direkt oder indirekt erfasst und vorzugsweise in ein elektrisches Sensorsignal umwandelt. Dies kann beispielsweise über das Aussenden und/oder das Empfangen von Schallwellen und/oder elektromagnetischen Wellen und/oder über ein Magnetfeld bzw. die Änderung eines Magnetfelds und/oder das Empfangen von Satellitensignalen beispielsweise eines GPS-Signals erfolgen. Eine solche Sensoreinheit kann beispielsweise Beschleunigungssensorelemente, welche beschleunigungsrelevante Informationen des Fahrzeugs erfassen, und/oder Sensorelemente umfassen, welche Gegenstände und/oder Hindernisse und/oder andere crashrelevante Fahrzeugumfelddaten ermitteln und zur Auswertung zur Verfügung stellen. Solche Sensorelemente können beispielsweise auf Video- und/oder Radar- und/oder Lidar und/oder PMD- und/oder Ultraschall-Technologien basieren. Zudem können auch Signale und Informationen einer vorhandenen ABS-Sensorik und die im dafür vorgesehenen Steuergerät abgeleiteten Größen ausgewertet werden. Basierend auf den beschleunigungsrelevanten Informationen und/oder daraus ermittelten Größen können beispielsweise eine Fahrzeugbewegung und eine Fahrzeuglage im dreidimensionalen Raum geschätzt werden und zur Unfallerkennung ausgewertet werden.

Zur Positionsbestimmung des Fahrzeugs können beispielsweise globale Navigationssatellitensysteme GNSS (GNSS: Global Navigation Satellite System) eingesetzt werden. Hierbei wird GNSS als Sammelbegriff für die Verwendung bestehender und künftiger globaler Satellitensysteme wie NAVSTAR GPS (Global Positioning System) der Vereinigten Staaten von Amerika, GLONASS (Global Navigation Satellite System) der Russischen Föderation, Galileo der Europäischen Union, Beidou der Volksrepublik China usw. eingesetzt.

Unter einem hochautomatisierten oder autonomen Fahrzeug, wird ein Fahrzeug verstanden, welches mindestens eine hochautomatisierte oder autonome Fahrfunktion aufweist, welche zumindest teilweise eine tatsächliche Fahraufgabe übernehmen kann. Über diese mindestens eine hochautomatisierte oder autonome Fahrfunktion erkennt das Fahrzeug beispielsweise den Straßenverlauf, andere Verkehrsteilnehmer oder Hindernisse selbständig und berechnet die entsprechenden Ansteuerbefehle, welche an die Aktuatoren im Fahrzeug weiterleitet werden, wodurch der Fahrverlauf des Fahrzeugs korrekt beeinflusst wird. Der Fahrer ist bei einem solchen hochautomatisierten oder autonomen Fahrzeug in der Regel nicht am Fahrgeschehen beteiligt. Trotzdem sind Maßnahmen und Mittel, beispielsweise in Form von elektrischen oder elektronischen Betätigungselementen, vorgesehen, die es dem Fahrer ermöglichen, jederzeit selbst in das Fahrgeschehen eingreifen zu können. Der vom Fahrer mittels der Betätigungselemente erzeugte Bremswunsch wird dann über elektrische Signale an das Hauptsystem und/oder das Sekundärsystem weitergeleitet. Ein mechanischer und/oder hydraulischen Durchgriff durch den Fahrer ist jedoch nicht vorhanden.

Die mindestens eine Fahrfunktion wertet zur Trajektorienplanung von internen Sensoreinheiten erfasste Fahrzeugdaten wie ABS-Eingriffe, Lenkwinkel, Position, Richtung, Geschwindigkeit, Beschleunigung usw. und/oder Fahrzeugumfelddaten aus, welche beispielsweise über Kamera-, Radar-, Lidar- und/oder Ultraschallsensoreinheiten erfasst werden, und steuert die Auswerte- und Steuereinheiten des Hauptsystems und des Sekundärsystems entsprechend an, um einen gewünschten Bremsdruck zu erzeugen und/oder Stabilisierungsvorgänge in Längs- und/oder Querrichtung durch individuelle Bremsdruckmodulation in den Radbremsen zu realisieren.

Durch die in den abhängigen Ansprüchen aufgeführten Maßnahmen und Weiterbildungen sind vorteilhafte Verbesserungen des im unabhängigen Patentanspruch 1 angegebenen hydraulischen Bremssystems für ein Fahrzeug mit mindestens zwei Achsen, insbesondere für ein hochautomatisiertes oder autonomes Fahrzeug möglich.

Besonders vorteilhaft ist, dass die erste Modulationseinheit und/oder die zweite Modulationseinheit für jede der zugeordneten Radbremsen zur individuellen Bremsdruckmodulation jeweils ein Einlassventil und jeweils ein Auslassventil umfassen kann.

In vorteilhafter Ausgestaltung des Bremssystems können das erste Subbremssystem und/oder das zweite Subbremssystem als hydraulisch offene Systeme ausgeführt werden, wobei ein erster Druckablasspfad im ersten Subbremssystem die Auslassventile der zugeordneten Radbremsen der ersten Achse mit dem ersten Fluidbehälter verbinden kann. Ein zweiter Druckablasspfad im zweiten Subbremssystem kann die Auslassventile der zugeordneten Radbremsen der zweiten Achse mit dem zweiten Fluidbehälter verbinden. Unter einem hydraulisch offenen Bremssystem, wird ein Bremssystem verstanden, bei welchem während einer individuellen Bremsdruckmodulation abgelassenes Bremsfluid aus den Radbremsen über einen korrespondierenden Druckablasspfad zu einem korrespondierenden Fluidbehälter zurückgeführt werden kann. Das offene System zeichnet sich zudem dadurch aus, dass während einer radindividuellen Druckmodulation oder Druckreduktion Bremsflüssigkeitsvolumen über die Auslassventile aus dem Druckkreis direkt wieder in den korrespondierenden Fluidspeicher auf Atmosphärendruck abgelassen werden kann. Dies hat in einem fahrerentkoppelten System den Vorteil, dass die Komponenten Niederdruckspeicher und Schaltventil für den Pumpenansaugpfad nicht benötigt werden und weiterhin auch ein beliebig großer Druckabbau dargestellt werden kann, da nie eine Speicherkammer volllaufen kann.

In weiterer vorteilhafter Ausgestaltung des Bremssystems kann im ersten Bremskreis nach dem ersten Fluidbehälter zuerst der erste Druckerzeuger und dann der zweite Druckerzeuger angeordnet werden. Alternativ kann im ersten Bremskreis nach dem ersten Fluidbehälter zuerst der zweite Druckerzeuger und dann der erste Druckerzeuger angeordnet werden. Das bedeutet, dass die Reihenfolge der fluidisch in Reihe geschalteten Druckerzeuger ohne negative Auswirkungen auf die Funktionalität an die Einbaubedingungen angepasst werden kann.

In weiterer vorteilhafter Ausgestaltung des Bremssystems können die Druckerzeuger jeweils als Plungersystem oder als Pumpensystem oder als Pumpensystem mit Druckspeicher oder als elektrohydraulische Aktuatoren ausgeführt werden können. So können beispielsweise bei einer besonders vorteilhaften Ausführungsform des Bremssystems der erste Druckerzeuger des Hauptsystems als erstes Plungersystem und der zweiter Druckerzeuger als zweites Plungersystem oder als Pumpensystem und der dritte Druckerzeuger des Nebensystems als drittes Plungersystem ausgeführt werden. Durch die Ausführung des ersten Druckerzeugers und des dritten Druckerzeugers als Plungersysteme ergibt sich eine gute NVH-Performance im Gesamtsystem und ein einfacheres und/oder genaueres Monitoring und eine verbesserte Regelung. Dies ermöglicht, dass sowohl Lage als auch Volumen- und Druckaufbauinformationen im Hauptsystem und im Nebensystem in Vergleich zu anderen Konzepten (Pumpensystem) einfacher und insbesondere genauer erfasst werden können. Durch die Ausführung des zweiten Druckerzeugers als Plungersystem ergibt sich sowohl im Normalbetrieb als auch bei Ausfall des Hauptsystems eine sehr gute NVH-Performance. Durch die Ausführung des zweiten Druckerzeugers als Pumpensystem ergeben sich noch geringere Kosten, Bauraum und Gewicht im Vergleich zu anderen Konzepten (Plungersystem). Alternativ im ersten Subbremssystem ein Pumpensystem als erster Druckerzeuger eingesetzt werden. Als weitere Alternative kann das erste Subbremssystem als geschlossenes System ausgeführt werden, welches als zweiten Druckerzeuger ein Pumpensystem einsetzt.

In weiterer vorteilhafter Ausgestaltung des Bremssystems kann der erste Bremskreis für das erste Plungersystem ein Absperrventil aufweisen, welches ein Nachladen von Bremsfluid aus dem ersten Fluidbehälter ermöglicht. Zudem kann der zweite Bremskreis für das zweite Plungersystem ein Absperrventil aufweisen, welches ein Nachladen von Bremsfluid aus dem zweiten Fluidbehälter ermöglicht. Aufgrund der offenen Architektur ist das erste Plungersystem in der Lage Fluid nachzuladen bzw. nachzuschnüffeln. Hierbei verhindern die Absperrventile in vorteilhafter Weise, dass die Plungersysteme während des Nachladevorgangs Bremsfluid aus den Radbremsen ansaugen. Des Weiteren kann der erste Bremskreis für das erste Plungersystem eine Saugleitung mit Rückschlagventil aufweisen, welche das erste Plungersystem zusätzlich mit dem ersten Fluidbehälter hydraulisch verbinden kann. Zudem kann der zweite Bremskreis für das zweite Plungersystem eine Saugleitung mit Rückschlagventil aufweisen, welche das dritte Plungersystem zusätzlich mit dem zweiten Fluidbehälter hydraulisch verbinden kann. Dadurch kann der Nachladevorgang der Plungersysteme insbesondere bei Tieftemperaturen schneller durchgeführt werden.

In weiterer vorteilhafter Ausgestaltung des Bremssystems kann der erste Bremskreis für das Pumpensystem im ersten Bremskreis ein Druckhalte- und Druckregelventil aufweisen, welches dem Sekundärsystem zugeordnet ist und von der zweiten Auswerte- und Steuereinheit angesteuert und von der zweiten Energieversorgung mit Energie versorgt werden kann. Die Einlassventile und das Druckhalte- und Druckregelventil können beispielsweise als regelbare stromlos offene Magnetventile ausgeführt werden. Die Auslassventile und die Absperrventile können beispielsweise als elektromagnetische stromlos geschlossene Schaltventile ausgeführt werden. Durch diese Ausführung der Bremskreise ist es in vorteilhafter Weise möglich, Komponenten aus bereits bekannten ESP-Systemen einzusetzen und über bereits existierenden Skaleneffekt (ESP wird millionenfach gebaut) sehr niedrige Gesamtsystemkosten zu erzielen.

In weiterer vorteilhafter Ausgestaltung des Bremssystems kann der erste Bremskreis für das Pumpensystem eine Saugleitung mit Rückschlagventil aufweisen, welche das Pumpensystem zusätzlich mit dem ersten Fluidbehälter hydraulisch verbinden kann. Speziell für eine Variante, bei welcher der als Pumpensystem ausgeführte Druckerzeuger unterhalb von dem als Plungersystem ausgeführten ersten Druckerzeuger angeordnet ist, kann eine heiße Redundanz umgesetzt werden. Hierbei kann das Pumpensystem das Plungersystem unterstützen, so dass das Hauptsystem bezüglich eines zu erreichenden Maximaldrucks und damit eines maximalen Antriebsmotormoments kleiner und kostengünstiger dimensioniert werden kann. Zudem ergeben sich durch den zusätzlichen Saugpfad für das Pumpensystem keine Probleme des Saugens bei Tieftemperaturen.

In weiterer vorteilhafter Ausgestaltung des Bremssystems können die Auswerte- und Steuereinheiten der Subbremssysteme über ein Bussystem miteinander kommunizieren. Hierbei können die erste und zweite Auswerte- und Steuereinheit des ersten Subbremssystems als Master und die dritte Auswerte- und Steuereinheit des zweiten Subbremssystems als Slave implementiert werden. Das bedeutet, dass Fahrzeugfunktionen, wie beispielsweise ein Fahrzeugregler auf die erster und zweite Auswerte- und Steuereinheit des ersten Subbremssystem berechnet und abgestimmt werden und Stellanforderungen vom ersten Subbremssystem an die dritte Auswerte- und Steuereinheit des zweiten Subbremssystems übertragen werden.

In weiterer vorteilhafter Ausgestaltung des Bremssystems können Komponenten der ersten Modulationseinheit zur individuellen Bremsdruckmodulation dem Hauptsystem zugeordnet werden, so dass diese Komponenten der ersten Modulationseinheit und der erste Druckerzeuger von der ersten Auswerte- und Steuereinheit angesteuert und von der ersten Energieversorgung mit Energie versorgt werden. Analog können Komponenten der zweiten Modulationseinheit zur individuellen Bremsdruckmodulation dem Nebensystem zugeordnet werden, so dass diese Komponenten der zweiten Modulationseinheit und der dritte Druckerzeuger von der dritten Auswerte- und Steuereinheit angesteuert und von der dritten Energieversorgung mit Energie versorgt werden können. Hierbei kann die erste Energieversorgung des Hauptsystems oder die zweite Energieversorgung des Sekundärsystems als dritte Energieversorgung des Nebensystems eingesetzt werden. Alternativ kann die dritte Energieversorgung als separate Energieversorgung ausgeführt werden, welche unabhängig von der ersten und zweiten Energieversorgung ist.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockdiagramm eines Ausführungsbeispiels eines erfindungsgemäßen hydraulischen Bremssystem für ein Fahrzeug mit mindestens zwei Achsen, insbesondere für ein hochautomatisiertes oder autonomes Fahrzeug.
Fig. 2 zeigt ein schematisches Blockdiagramm eines Ausführungsbeispiels eines ersten Subbremssystems des erfindungsgemäßen Bremssystems aus Fig. 1.
Fig. 3 zeigt ein schematisches Blockdiagramm eines Ausführungsbeispiels eines zweiten Subbremssystems des erfindungsgemäßen Bremssystems aus Fig. 1.
Fig. 4 zeigt ein schematisches hydraulisches Schaltbild eines zweiten Bremskreises des zweiten Subbremssystems aus Fig. 3.
Fig. 5 zeigt ein schematisches hydraulisches Schaltbild eines ersten Ausführungsbeispiels eines ersten Bremskreises des ersten Subbremssystems aus Fig. 2.
Fig. 6 zeigt ein schematisches hydraulisches Schaltbild eines zweiten Ausführungsbeispiels des ersten Bremskreises des ersten Subbremssystems aus Fig. 2.
Fig. 7 zeigt ein schematisches hydraulisches Schaltbild eines dritten Ausführungsbeispiels des ersten Bremskreises des ersten Subbremssystems aus Fig. 2.
Fig. 8 zeigt ein schematisches hydraulisches Schaltbild eines vierten Ausführungsbeispiels des ersten Bremskreises des ersten Subbremssystems aus Fig. 2.

### Ausführungsformen der Erfindung

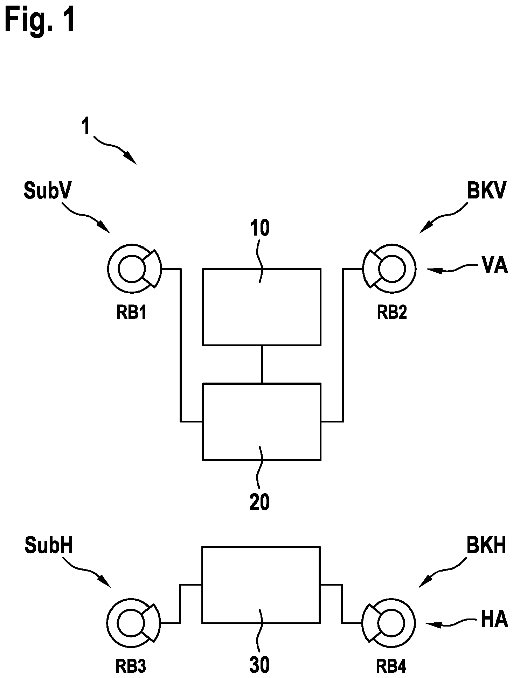

Wie aus Fig. 1 bis 3 ersichtlich ist, umfasst das dargestellten Ausführungsbeispiel eines erfindungsgemäßen hydraulischen Bremssystem 1 für ein Fahrzeug mit mindestens zwei Achsen VA, HA, insbesondere für ein hochautomatisiertes oder autonomes Fahrzeug, mindestens zwei voneinander hydraulisch getrennte Subbremssysteme SubV, SubH. Hierbei umfasst ein erstes Subbremssystem SubV einen ersten Bremskreis BKV, ein Hauptsystem 10, welches eine erste Energieversorgung EV1 und eine erste Auswerte- und Steuereinheit 14 aufweist, und ein Sekundärsystem 20, welches eine von der ersten Energieversorgung EV1 unabhängige zweite Energieversorgung EV2 und eine zweite Auswerte- und Steuereinheit 24 aufweist, zur redundanten Druckerzeugung im ersten Bremskreis BKV. Das erste Subbremssystem SubV ist einer ersten Achse VA, hier einer Vorderachse des Fahrzeugs, mit mindestens zwei Radbremsen RB1, RB2 zugeordnet. Der erste Bremskreis BVK umfasst einen dem Hauptsystem 10 zugeordneten ersten Druckerzeuger 12, einen dem Sekundärsystem 20 zugeordneten zweiten Druckerzeuger 22, welche zwischen einem ersten Fluidbehälter 7V und den mindestens zwei Radbremsen RB1, RB2 der ersten Achse VA hydraulisch in Reihe geschaltet sind, und eine erste Modulationseinheit 16V zur hydraulischen Verbindung der Druckerzeuger 12, 22 mit den mindestens zwei Radbremsen RB1, RB2 und zur individuellen Bremsdruckmodulation in den mindestens zwei Radbremsen RB1, RB2. Ein zweites Subbremssystem SubH umfasst einen zweiten Bremskreis BKH und ein Nebensystem 30, welches eine dritte Energieversorgung EV3 und eine dritte Auswerte- und Steuereinheit 34 aufweist, zur Druckerzeugung im zweiten Bremskreis BKH. Das zweite Subbremssystem SubH ist einer zweiten Achse HA, hier der Hinterachse des Fahrzeugs, mit mindestens zwei Radbremsen RB3, RB4 zugeordnet. Der zweite Bremskreis BKH umfasst einen dem Nebensystem 30 zugeordneten dritten Druckerzeuger 32, welcher zwischen einem zweiten Fluidbehälter 7H und den mindestens zwei Radbremsen RB3, RB4 der zweiten Achse HA angeordnet ist, und eine zweite Modulationseinheit 16H zur hydraulischen Verbindung des Druckerzeugers 32 mit den mindestens zwei Radbremsen RB3, RB4 und zur individuellen Bremsdruckmodulation in den mindestens zwei Radbremsen RB3, RB4.

Die Auswerte- und Steuereinheiten 14, 24, 34 der beiden Subbremssysteme SubV, SubH kommunizieren über ein nicht dargestelltes Bussystem miteinander, wobei die erste und zweite Auswerte- und Steuereinheit 14, 24 des ersten Subbremssystems SubV als Master und die dritte Auswerte- und Steuereinheit 34 des zweiten Subbremssystems SubH als Slave implementiert sind. Im dargestellten Ausführungsbeispiel ist die dritte Energieversorgung EV3 als separate von der ersten und zweiten Energieversorgung EV1, EV2 unabhängige Einheit ausgeführt. Bei alternativen nicht dargestellten Ausführungsbeispielen kann die erste Energieversorgung EV1 des Hauptsystems 10 oder die zweite Energieversorgung EV2 des Sekundärsystems 20 als dritte Energieversorgung E3 des Nebensystems 30 eingesetzt werden.

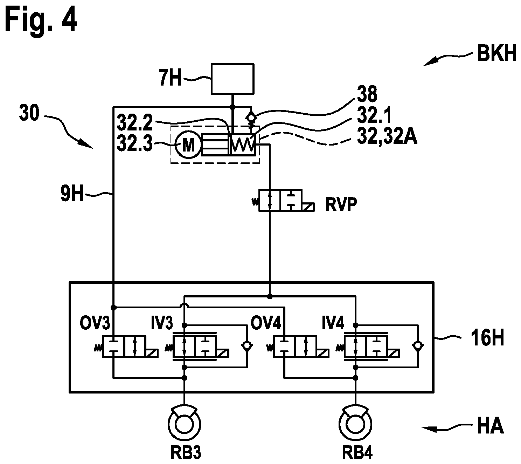

Wie aus Fig. 4 weiter ersichtlich ist, ist der dritte Druckerzeuger 32 des Nebensystems 30 im dargestellten Ausführungsbeispiel des zweiten Bremskreises BKH als Plungersystem 32A ausgeführt. Das Plungersystem 32A umfasst eine Zylinder-Kolben-Einheit, welche eine Fluidkammer 32.1 und einen Kolben 32.2 umfasst. Hierbei wird der Kolben 32.2 von einem Antrieb 32.3, welcher hier als Elektromotor ausgeführt ist, gegen die Kraft einer nicht näher bezeichneten Rückstellfeder bewegt, um einen gewünschten Druck im zweiten Bremskreis BKH einzustellen. Im dargestellten Ausführungsbeispiel ist die Fluidkammer 32.1 des Plungersystems 32A im stromlosen Zustand offen.

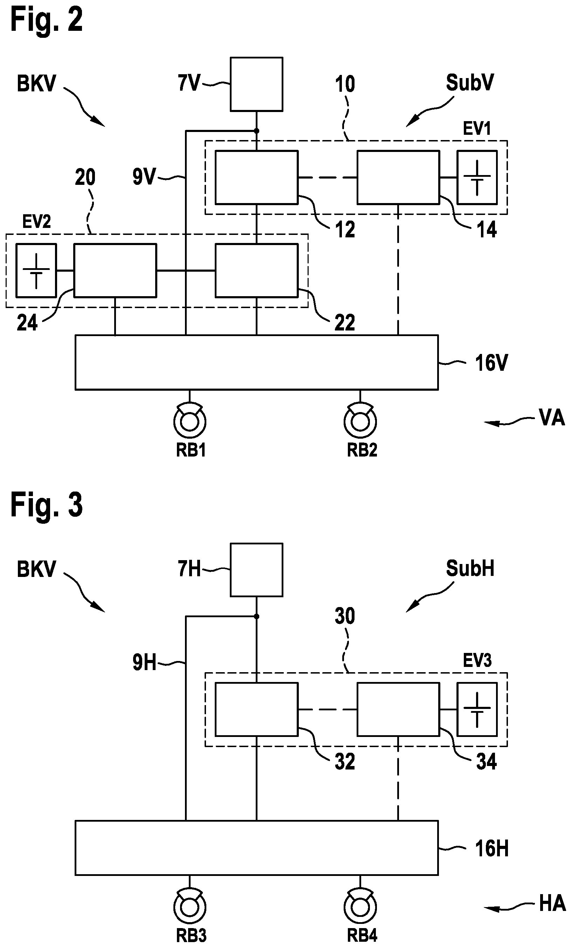

Wie aus Fig. 4 weiter ersichtlich ist, umfasst die zweite Modulationseinheit 16H im dargestellten Ausführungsbeispiel des zweiten Bremskreises BKH für jede der zugeordneten Radbremsen RB3, RB4 zur individuellen Bremsdruckmodulation jeweils ein Einlassventil IV3, IV4 und jeweils ein Auslassventil OV3, OV4. Wie aus Fig. 3 und 4 weiter ersichtlich ist, ist das zweite Subbremssystem SubH als hydraulisch offenes System ausgeführt, und ein zweiter Druckablasspfad 9H verbindet im zweiten Subbremssystem SubH die Auslassventile OV3, OV4 der zugeordneten Radbremsen RB3, RB4 der zweiten Achse HA mit dem zweiten Fluidbehälter 7H.

Wie aus Fig. 4 weiter ersichtlich ist, weist der zweite Bremskreis BKH für das zweite Plungersystem 32A ein Absperrventil RVP auf, welches ein Nachladen von Bremsfluid aus dem zweiten Fluidbehälter 7H ermöglicht. Zum Nachladen der Fluidkammer 32.1 des dritten Plungersystems 32A wird das Absperrventil RVP geöffnet, damit das Plungersystem 32A kein Fluid aus den Radbremsen RB3, RB4 absaugen kann. Zudem weist der zweite Bremskreis BKH für das dritte Plungersystem 32A zusätzlich zur direkten Verbindung mit dem zweiten Fluidbehälter 7H eine Saugleitung mit Rückschlagventil 38 auf, welche das dritte Plungersystem 32A zusätzlich mit dem zweiten Fluidbehälter 7H hydraulisch verbindet. Komponenten der zweiten Modulationseinheit 16H sind zur individuellen Bremsdruckmodulation dem Nebensystem 30 zugeordnet, so dass diese Komponenten der zweiten Modulationseinheit 16H, das Absperrventil RVP und der dritte Druckerzeuger 32 von der dritten Auswerte- und Steuereinheit 34 angesteuert und von der dritten Energieversorgung EV3 mit Energie versorgt werden.

Wie aus Fig. 2 und 5 bis 8 weiter ersichtlich ist, ist der erste Druckerzeuger 12 des Hauptsystems 10 als erstes Plungersystem 12A und der zweiter Druckerzeuger 22 als zweites Plungersystem 22A oder als Pumpensystem 22B ausgeführt. Die Plungersysteme 12A, 22A umfassen jeweils eine Zylinder-Kolben-Einheit, welche eine Fluidkammer 12.1, 22.1 und einen Kolben 12.2, 22.2 umfasst. Hierbei werden die Kolben 12.2, 22.2 jeweils von einem Antrieb 12.3, 22.3, welche hier als Elektromotoren ausgeführt sind, gegen die Kraft von nicht näher bezeichneten Rückstellfedern bewegt, um einen gewünschten Druck im ersten Bremskreis BKV, BKVA, BKVB, BKVC, BKVD einzustellen. Im dargestellten Ausführungsbeispiel sind die Fluidkammern 12.1, 22.2 der Plungersysteme 12A, 22A im stromlosen Zustand offen. Das Pumpensystem 22B umfasst eine Pumpe 22.1, welche von einem Antrieb 22.3, hier einem Elektromotor, angetrieben wird, um einen gewünschten Druck im ersten Bremskreis BKV, BKVA, BKVB einzustellen.

Wie aus Fig. 2 und 5 bis 8 weiter ersichtlich ist, umfasst die erste Modulationseinheit 16V in den dargestellten Ausführungsbeispielen des ersten Bremskreises BKV, BKVA, BKVB, BKVC, BKVD für jede der zugeordneten Radbremsen RB1, RB2 zur individuellen Bremsdruckmodulation jeweils ein Einlassventil IVI, IV2 und jeweils ein Auslassventil OV1, OV3. Komponenten der ersten Modulationseinheit 16V sind zur individuellen Bremsdruckmodulation dem Hauptsystem 10, 10A, 10B, 10C, 10D zugeordnet, so dass diese Komponenten der ersten Modulationseinheit 16V und der erste Druckerzeuger 12 von der ersten Auswerte- und Steuereinheit 14 angesteuert und von der ersten Energieversorgung EV1 mit Energie versorgt werden. Zudem ist das erste Subbremssystem SubV in den dargestellten Ausführungsbeispielen als hydraulisch offenes System ausgeführt, und ein erster Druckablasspfad 9V verbindet im ersten Subbremssystem SubV die Auslassventile OV1, OV2 der zugeordneten Radbremsen RB1, RB2 der ersten Achse VA mit dem ersten Fluidbehälter 7V.

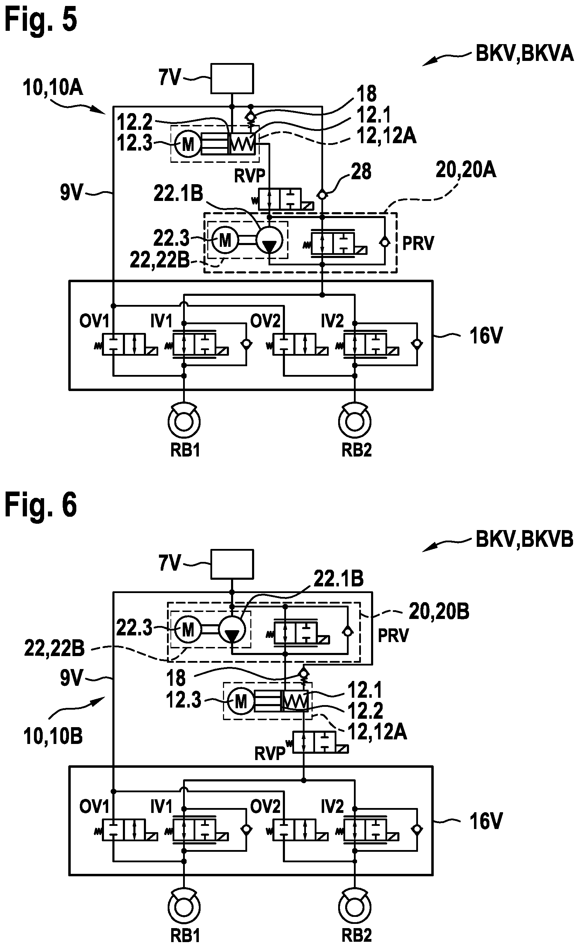

Wie aus Fig. 5 weiter ersichtlich ist, ist im dargestellten ersten Ausführungsbeispiel des ersten Bremskreises BKVA der als Plungersystem 12A ausgeführte erste Druckerzeuger 12 im Hydraulikpfad vor dem als Pumpensystem 22B ausgeführten zweiten Druckerzeuger 22 angeordnet. Zudem ist für das erste Plungersystem 12A im ersten Bremskreis BKVA ein Absperrventil RVP angeordnet, welches dem Hauptsystem 10A zugeordnet ist und von der ersten Auswerte- und Steuereinheit 14 angesteuert und von der ersten Energieversorgung EV1 mit Energie versorgt wird. Das Absperrventil RVP ermöglicht ein Nachladen von Bremsfluid aus dem ersten Fluidbehälter 7V. Zum Nachladen der Fluidkammer 12.1 des ersten Plungersystems 12A wird das Absperrventil RVP von der ersten Auswerte- und Steuereinheit 14 geöffnet, damit das Plungersystem 12A kein Fluid aus den Radbremsen RB1, RB2 absaugen kann. Zudem weist der erste Bremskreis BKVA für das erste Plungersystem 12A zusätzlich zur direkten Verbindung mit dem Fluidbehälter 7V eine Saugleitung mit Rückschlagventil 18 auf, welche das erste Plungersystem 12A zusätzlich mit dem ersten Fluidbehälter 7V hydraulisch verbindet. Wie aus Fig. 5 weiter ersichtlich ist, weist der erste Bremskreis BKVA für das Pumpensystem 22B ein Druckhalte- und Druckregelventil PRV auf, welches dem Sekundärsystem 20A zugeordnet ist und wie das Pumpensystem 22B von der zweiten Auswerte- und Steuereinheit 24 angesteuert und von der zweiten Energieversorgung EV2 mit Energie versorgt wird.

Wie aus Fig. 6 weiter ersichtlich ist, umfasst das dargestellte zweite Ausführungsbeispiel des ersten Bremskreises BKVB die gleichen Komponenten wie das in Fig. 5 dargestellte erste Ausführungsbeispiel des ersten Bremskreises BKVA. Als Unterschied zum ersten Ausführungsbeispiel ist der als Plungersystem 12A ausgeführte erste Druckerzeuger 12 im zweiten Ausführungsbeispiel im Hydraulikpfad nach dem als Pumpensystem 22B ausgeführten zweiten Druckerzeuger 22 angeordnet. Da das Pumpensystem 20B direkt mit dem ersten Fluidbehälter 7V verbunden ist, kann im dargestellten zweiten Ausführungsbeispiel auf die zusätzliche Saugleitung mit Rückschlagventil 18, welche das erste Plungersystem 12A zusätzlich mit dem ersten Fluidbehälter 7V hydraulisch verbindet, verzichtet werden. Analog zum ersten Ausführungsbeispiel ist für das erste Plungersystem 12A im ersten Bremskreis BKVB ein Absperrventil RVP angeordnet, welches dem Hauptsystem 10B zugeordnet ist und von der ersten Auswerte- und Steuereinheit 14 angesteuert und von der ersten Energieversorgung EV1 mit Energie versorgt wird. Das Absperrventil RVP ermöglicht ein Nachladen von Bremsfluid aus dem ersten Fluidbehälter 7V. Zudem weist der erste Bremskreis BKVB für das erste Plungersystem 12A zusätzlich zur direkten Verbindung mit dem ersten Fluidbehälter 7V eine Saugleitung mit Rückschlagventil 18 auf, welche das erste Plungersystem 12A zusätzlich mit dem ersten Fluidbehälter 7V hydraulisch verbindet. Wie aus Fig. 6 weiter ersichtlich ist, weist der erste Bremskreis BKVB für das Pumpensystem 22B ein Druckhalte- und Druckregelventil PRV auf, welches dem Sekundärsystem 20B zugeordnet ist und wie das Pumpensystem 22B von der zweiten Auswerte- und Steuereinheit 24 angesteuert und von der zweiten Energieversorgung EV2 mit Energie versorgt wird.

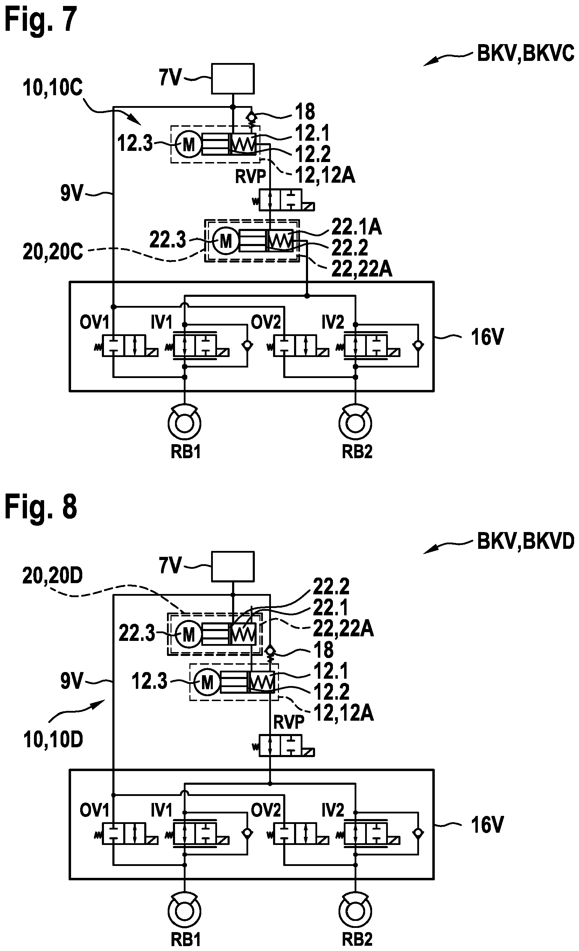

Wie aus Fig. 7 weiter ersichtlich ist, ist im dargestellten dritten Ausführungsbeispiel des ersten Bremskreises BKVC der als erstes Plungersystem 12A ausgeführte erste Druckerzeuger 12 im Hydraulikpfad vor dem als zweites Plungersystem 22A ausgeführten zweiten Druckerzeuger 22 angeordnet. Das zweite Plungersystem 22A ist dem Sekundärsystem 20C zugeordnet und wird von der zweiten Auswerte- und Steuereinheit 24 angesteuert und von der zweiten Energieversorgung EV2 mit Energie versorgt. Zudem ist für das erste Plungersystem 12A im ersten Bremskreis BKVC ein Absperrventil RVP angeordnet, welches dem Hauptsystem 10C zugeordnet ist und von der ersten Auswerte- und Steuereinheit 14 angesteuert und von der ersten Energieversorgung EV1 mit Energie versorgt wird. Das Absperrventil RVP ermöglicht ein Nachladen von Bremsfluid aus dem ersten Fluidbehälter 7V. Zum Nachladen der Fluidkammer 12.1 des ersten Plungersystems 12A wird das Absperrventil RVP von der ersten Auswerte- und Steuereinheit 14 geöffnet, damit das Plungersystem 12A kein Fluid aus den Radbremsen RB1, RB2 absaugen kann.

Wie aus Fig. 8 weiter ersichtlich ist, umfasst das dargestellte vierte Ausführungsbeispiel des ersten Bremskreises BKVD die gleichen Komponenten wie das in Fig. 7 dargestellte dritte Ausführungsbeispiel des ersten Bremskreises BKVC. Als Unterschied zum dritten Ausführungsbeispiel ist der als erstes Plungersystem 12A ausgeführte erste Druckerzeuger 12 im zweiten Ausführungsbeispiel im Hydraulikpfad nach dem als zweites Plungersystem 22A ausgeführten zweiten Druckerzeuger 22 angeordnet. Analog zum dritten Ausführungsbeispiel ist das zweite Plungersystem 22A dem Sekundärsystem 20C zugeordnet und wird von der zweiten Auswerte- und Steuereinheit 24 angesteuert und von der zweiten Energieversorgung EV2 mit Energie versorgt. Zudem ist für das erste Plungersystem 12A im ersten Bremskreis BKVC ein Absperrventil RVP angeordnet, welches dem Hauptsystem 10D zugeordnet ist und von der ersten Auswerte- und Steuereinheit 14 angesteuert und von der ersten Energieversorgung EV1 mit Energie versorgt wird. Das Absperrventil RVP ermöglicht ein Nachladen von Bremsfluid aus dem ersten Fluidbehälter 7V. Zum Nachladen der Fluidkammer 12.1 des ersten Plungersystems 12A wird das Absperrventil RVP von der ersten Auswerte- und Steuereinheit 14 geöffnet, damit das Plungersystem 12A kein Fluid aus den Radbremsen RB1, RB2 absaugen kann.

Bei nicht dargestellten alternativen Ausführungsbeispielen können die Druckerzeuger 12, 22, 32 jeweils als Pumpensystem mit Druckspeicher oder als elektrohydraulische Aktuatoren ausgeführt werden.

Ausführungsformen der vorliegenden Erfindung stellen ein hydraulisches Bremssystem für ein Fahrzeug mit mindestens zwei Achsen, insbesondere für ein hochautomatisiertes oder autonomes Fahrzeug, ohne mechanischen und/oder hydraulischen Durchgriff durch den Fahrer zur Verfügung, welches auch im Fehlerfall durch drei Druckerzeuger und ein geeignetes Redundanzkonzept eine ausreichende Bremsperformance ermöglicht. Von den drei Druckerzeugern sind zwei in ein redundantes Subbremssystem in serieller Verschaltung an einer ersten Achse, vorzugsweise an einer Vorderachse implementiert. Der dritte Druckerzeuger ist in einem weiteren Subbremssystem an einer zweiten Achse, vorzugweise an einer Hinterachse implementiert. Zwischen den Subbremssystemen an den verschiedenen Achsen besteht keine hydraulische Verbindung.

## Patentansprüche

1. Hydraulisches Bremssystem (1) für ein Fahrzeug mit mindestens zwei Achsen (VA, HA), insbesondere für ein hochautomatisiertes oder autonomes Fahrzeug, mit mindestens zwei voneinander hydraulisch getrennten Subbremssystemen (SubV, SubH), wobei ein erstes Subbremssystem (SubV) einen ersten Bremskreis (BKV), ein Hauptsystem (10), welches eine erste Energieversorgung (EV1) und eine erste Auswerte- und Steuereinheit (14) aufweist, **gekennzeichnet durch** ein Sekundärsystem (20), welches eine von der ersten Energieversorgung (EV1) unabhängige zweite Energieversorgung (EV2) und eine zweite Auswerte- und Steuereinheit (24) aufweist, zur redundanten Druckerzeugung im ersten Bremskreis (BKV) umfasst und einer ersten Achse (VA) mit mindestens zwei Radbremsen (RB1, RB2) zugeordnet ist, wobei der erste Bremskreis (BVK) einen dem Hauptsystem (10) zugeordneten ersten Druckerzeuger (12), einen dem Sekundärsystem (20) zugeordneten zweiten Druckerzeuger (22), welche zwischen einem ersten Fluidbehälter (7V) und den mindestens zwei Radbremsen (RB1, RB2) der ersten Achse (VA) hydraulisch in Reihe geschaltet sind, und eine erste Modulationseinheit (16V) zur hydraulischen Verbindung der Druckerzeuger (12, 22) mit den mindestens zwei Radbremsen (RB1, RB2) und zur individuellen Bremsdruckmodulation in den mindestens zwei Radbremsen (RB1, RB2) umfasst, wobei ein zweites Subbremssystem (SubH) einen zweiten Bremskreis (BKH) und ein Nebensystem (30), welches eine dritte Energieversorgung (EV3) und eine dritte Auswerte- und Steuereinheit (34) aufweist, zur Druckerzeugung im zweiten Bremskreis (BKH) umfasst und einer zweiten Achse (VA) mit mindestens zwei Radbremsen (RB3, RB4) zugeordnet ist, wobei der zweite Bremskreis (BKH) einen dem Nebensystem (30) zugeordneten dritten Druckerzeuger (32), welcher zwischen einem zweiten Fluidbehälter (7H) und den mindestens zwei Radbremsen (RB3, RB4) der zweiten Achse (HA) angeordnet ist, und eine zweite Modulationseinheit (16H) zur hydraulischen Verbindung des Druckerzeugers (32) mit den mindestens zwei Radbremsen (RB3, RB4) und zur individuellen Bremsdruckmodulation in den mindestens zwei Radbremsen (RB3, RB4) umfasst.

2. Bremssystem (1) nach Anspruch 1, **dadurch gekennzeichnet, dass** die erste Modulationseinheit (16V) und/oder die zweite Modulationseinheit (16H) für jede der zugeordneten Radbremsen (RB1, RB2, RB3, RB4) zur individuellen Bremsdruckmodulation jeweils ein Einlassventil (IV1, IV2, IV3, IV4) und jeweils ein Auslassventil (OV1, OV2, OV3, OV4) umfasst.

3. Bremssystem (1) nach Anspruch 2, **dadurch gekennzeichnet, dass** das erste Subbremssystem (SubV) und/oder das zweite Subbremssystem (SubH) als hydraulisch offene Systeme ausgeführt sind, wobei ein erster Druckablasspfad (9V) im ersten Subbremssystem (SubV) die Auslassventile (OV1, OV2) der zugeordneten Radbremsen (RB1, RB2) der ersten Achse (VA) mit dem ersten Fluidbehälter (7V) verbindet, und wobei ein zweiter Druckablasspfad (9H) im zweiten Subbremssystem (SubH) die Auslassventile (OV3, OV4) der zugeordneten Radbremsen (RB3, RB4) der zweiten Achse (HA) mit dem zweiten Fluidbehälter (7H) verbindet.

4. Bremssystem (1) nach einem der Ansprüche 1 bis 3, **dadurch gekennzeichnet, dass** im ersten Bremskreis (BKVA, BKVC) nach dem ersten Fluidbehälter (7V) zuerst der erste Druckerzeuger (12) und dann der zweite Druckerzeuger (22) angeordnet ist.

5. Bremssystem (1) nach einem der Ansprüche 1 bis 3, **dadurch gekennzeichnet, dass** im ersten Bremskreis (BKVB, BKVD) nach dem ersten Fluidbehälter (7) zuerst der zweite Druckerzeuger (22) und dann der erste Druckerzeuger (12) angeordnet ist.

6. Bremssystem (1) nach einem der Ansprüche 1 bis 5, **dadurch gekennzeichnet, dass** die Druckerzeuger (12, 22, 32) jeweils als Plungersystem (12A, 22A, 32A) oder als Pumpensystem (22B) oder als Pumpensystem mit Druckspeicher oder als elektrohydraulische Aktuatoren ausgeführt sind.

7. Bremssystem (1) nach Anspruch 6, **dadurch gekennzeichnet, dass** der erste Druckerzeuger (12) des Hauptsystems (10) als erstes Plungersystem (12A) und der zweiter Druckerzeuger (22) als zweites Plungersystem (22A) oder als Pumpensystem (22B) und der dritte Druckerzeuger (32) des Nebensystems (30) als drittes Plungersystem (32A) ausgeführt ist.

8. Bremssystem (1) nach Anspruch 7, **dadurch gekennzeichnet, dass** der erste Bremskreis (BKV) für das erste Plungersystem (12A) ein Absperrventil (RVP) aufweist, welches ein Nachladen von Bremsfluid aus dem ersten Fluidbehälter (7V) ermöglicht, wobei der zweite Bremskreis (BKH) für das zweite Plungersystem (32A) ein Absperrventil (RVP) aufweist, welches ein Nachladen von Bremsfluid aus dem zweiten Fluidbehälter (7H) ermöglicht.

9. Bremssystem (1) nach Anspruch 7 oder 8, **dadurch gekennzeichnet, dass** der erste Bremskreis (BKV) für das erste Plungersystem (12A) eine Saugleitung mit Rückschlagventil (18) aufweist, welche das erste Plungersystem (12) zusätzlich mit dem ersten Fluidbehälter (7V) hydraulisch verbindet, wobei der zweite Bremskreis (BKH) für das zweite Plungersystem (32A) eine Saugleitung mit Rückschlagventil (38) aufweist, welche das dritte Plungersystem (12) zusätzlich mit dem zweiten Fluidbehälter (7V) hydraulisch verbindet.

10. Bremssystem (1) nach einem der Ansprüche 7 bis 9, **dadurch gekennzeichnet, dass** der erste Bremskreis (BKV) für das Pumpensystem (22B) ein Druckhalte- und Druckregelventil (PRV) aufweist, welches dem Sekundärsystem (20) zugeordnet ist und von der zweiten Auswerte- und Steuereinheit (24) angesteuert und von der zweiten Energieversorgung (EV2) mit Energie versorgt wird.

11. Bremssystem (1) nach Anspruch 10, **dadurch gekennzeichnet, dass** der erste Bremskreis (BKV) für das Pumpensystem (22B) eine Saugleitung mit Rückschlagventil (28) aufweist, welche das Pumpensystem (22B) zusätzlich mit dem ersten Fluidbehälter (7V) hydraulisch verbindet.

12. Bremssystem (1) nach einem der Ansprüche 1 bis 11, **dadurch gekennzeichnet, dass** die Auswerte- und Steuereinheiten (14, 24, 34) der Subbremssysteme (SubV, SubH) über ein Bussystem miteinander kommunizieren, wobei die erste und zweite Auswerte- und Steuereinheit (14, 24) des ersten Subbremssystems (SubV) als Master und die dritte Auswerte- und Steuereinheit (34) des zweiten Subbremssystems (SubH) als Slave implementiert sind.

13. Bremssystem (1) nach einem der Ansprüche 1 bis 12, **dadurch gekennzeichnet, dass** Komponenten der ersten Modulationseinheit (16V) zur individuellen Bremsdruckmodulation dem Hauptsystem (10) zugeordnet sind, so dass diese Komponenten der Hydraulikeinheit (16) und der erste Druckerzeuger (12) von der ersten Auswerte- und Steuereinheit (14) angesteuert und von der ersten Energieversorgung (EV1) mit Energie versorgt werden.

14. Bremssystem (1) nach einem der Ansprüche 1 bis 13, **dadurch gekennzeichnet, dass** Komponenten der zweiten Modulationseinheit (16H) zur individuellen Bremsdruckmodulation dem Nebensystem (30) zugeordnet sind, so dass diese Komponenten der zweiten Modulationseinheit (16H) und der dritte Druckerzeuger (32) von der dritten Auswerte- und Steuereinheit (34) angesteuert und von der dritten Energieversorgung (EV3) mit Energie versorgt werden.

15. Bremssystem (1) nach einem der Ansprüche 1 bis 14, **dadurch gekennzeichnet, dass** die erste Achse (VA) eine Vorderachse und die zweite Achse (HA) eine Hinterachse des Fahrzeugs ist.

## Claims

1. Hydraulic brake system (1) for a vehicle having at least two axles (VA, HA), in particular for a highly automated or autonomous vehicle, having at least two sub-brake systems (SubV, SubH) which are hydraulically separated from one another, wherein a first sub-brake system (SubV) comprises a first brake circuit (BKV), a main system (10), which has a first power supply (EV1) and a first evaluation and control unit (14), **characterized by** a secondary system (20), which has a second power supply (EV2), which is independent of the first power supply (EV1), and a second evaluation and control unit (24), for redundantly generating pressure in the first brake circuit (BKV), and is assigned to a first axle (VA) having at least two wheel brakes (RB1, RB2), wherein the first brake circuit (BVK) comprises a first pressure generator (12) which is assigned to the main system (10), a second pressure generator (22) which is assigned to the secondary system (20) and is hydraulically connected in series between a first fluid container (7V) and the at least two wheel brakes (RB1, RB2) of the first axle (VA), and a first modulation unit (16V) for hydraulically connecting the pressure generators (12, 22) to the at least two wheel brakes (RB1, RB2) and for performing individual brake pressure modulation in the at least two wheel brakes (RB1, RB2), wherein a second sub-brake system (SubH) comprises a second brake circuit (BKH) and a subsidiary system (30), which has a third power supply (EV3) and a third evaluation and control unit (34), for generating pressure in the second brake circuit (BKH), and is assigned to a second axle (VA) having at least two wheel brakes (RB3, RB4), wherein the second brake circuit (BKH) comprises a third pressure generator (32) which is assigned to the subsidiary system (30) and is arranged between a second fluid container (7H) and the at least two wheel brakes (RB3, RB4) of the second axle (HA), and a second modulation unit (16H) for hydraulically connecting the pressure generator (32) to the at least two wheel brakes (RB3, RB4) and for performing individual brake pressure modulation in the at least two wheel brakes (RB3, RB4).

2. Brake system (1) according to Claim 1, **characterized in that** the first modulation unit (16V) and/or the second modulation unit (16H) respectively comprises an inlet valve (IV1, IV2, IV3, IV4) and respectively comprises an outlet valve (OV1, OV2, OV3, OV4) for each of the assigned wheel brakes (RB1, RB2, RB3, RB4) for performing individual brake pressure modulation.

3. Brake system (1) according to Claim 2, **characterized in that** the first sub-brake system (SubV) and/or the second sub-brake system (SubH) are embodied as hydraulically open systems, wherein a first pressure discharge path (9V) in the first sub-brake system (SubV) connects the outlet valves (OV1, OV2) of the assigned wheel brakes (RB1, RB2) of the first axle (VA) to the first fluid container (7V), and wherein a second pressure discharge path (9H) in the second sub-brake system (SubH) connects the outlet valves (OV3, OV4) of the assigned wheel brakes (RB3, RB4) of the second axle (HA) to the second fluid container (7H).

4. Brake system (1) according to one of Claims 1 to 3, **characterized in that** in the first brake circuit (BKVA, BKVC) firstly the first pressure generator (12) and then the second pressure generator (22) is arranged downstream of the first fluid container (7V) .

5. Brake system (1) according to one of Claims 1 to 3, **characterized in that** in the first brake circuit (BKVB, BKVD) firstly the second pressure generator (22) and then the first pressure generator (12) is arranged downstream of the first fluid container (7).

6. Brake system (1) according to one of Claims 1 to 5, **characterized in that** the pressure generators (12, 22, 32) are each embodied as a plunger system (12A, 22A, 32A) or as a pump system (22B) or as a pump system with a pressure accumulator or as electrohydraulic actuators.

7. Brake system (1) according to Claim 6, **characterized in that** the first pressure generator (12) of the main system (10) is embodied as a first plunger system (12A), and the second pressure generator (22) is embodied as a second plunger system (22A) or as a pump system (22B), and the third pressure generator (32) of the subsidiary system (30) is embodied as a third plunger system (32A).

8. Brake system (1) according to Claim 7, **characterized in that** the first brake circuit (BKV) has, for the first plunger system (12A), a shutoff valve (RVP) which permits recharging of brake fluid from the first fluid container (7V), wherein the second brake circuit (BKH) has, for the second plunger system (32A), a shutoff valve (RVP) which permits recharging of brake fluid from the second fluid container (7H).

9. Brake system (1) according to Claim 7 or 8, **characterized in that** the first brake circuit (BKV) has, for the first plunger system (12A), a suction line with a nonreturn valve (18) which additionally connects the first plunger system (12) hydraulically to the first fluid container (7V), wherein the second brake circuit (BKH) has, for the second plunger system (32A), a suction line with a nonreturn valve (38) which additionally connects the third plunger system (12) hydraulically to the second fluid container (7V).

10. Brake system (1) according to one of Claims 7 to 9, **characterized in that** the first brake circuit (BKV) has, for the pump system (22B), a pressure maintenance and control valve (PRV) which is assigned to the secondary system (20) and is actuated by the second evaluation and control unit (24) and supplied with power by the second power supply (EV2).

11. Brake system (1) according to Claim 10, **characterized in that** the first brake circuit (BKV) has, for the pump system (22B), a suction line with a nonreturn valve (28) which additionally connects the pump system (22B) hydraulically to the first fluid container (7V).

12. Brake system (1) according to one of Claims 1 to 11, **characterized in that** the evaluation and control units (14, 24, 34) of the sub-brake systems (SubV, SubH) communicate with one another via a bus system, wherein the first and second evaluation and control unit (14, 24) of the first sub-brake system (SubV) are implemented as a master, and the third evaluation and control unit (34) of the second sub-brake system (SubH) is implemented as a slave.

13. Brake system (1) according to one of Claims 1 to 12, **characterized in that** components of the first modulation unit (16V) for performing individual brake pressure modulation are assigned to the main system (10), so that these components of the hydraulic unit (16) and the first pressure generator (12) are actuated by the first evaluation and control unit (14) and supplied with power by the first power supply (EV1).

14. Brake system (1) according to one of Claims 1 to 13, **characterized in that** components of the second modulation unit (16H) for performing individual brake pressure modulation are assigned to the subsidiary system (30), so that these components of the second modulation unit (16H) and the third pressure generator (32) are actuated by the third evaluation and control unit (34) and supplied with power by the third power supply (EV3).

15. Brake system (1) according to one of Claims 1 to 14, **characterized in that** the first axle (VA) is a front axle, and the second axle (HA) is a rear axle, of the vehicle.

## Revendications

1. Système de freinage hydraulique (1) pour un véhicule doté d'au moins deux essieux (VA, HA), en particulier pour un véhicule hautement automatisé ou autonome, comprenant au moins deux sous-systèmes de freinage (SubV, SubH) séparés hydrauliquement l'un de l'autre, un premier sous-système de freinage (SubV) présentant un premier circuit de freinage (BKV), un système principal (10) qui présente une première alimentation en énergie (EV1) et une première unité d'évaluation et de commande (14),
**caractérisé par** un système secondaire (20) qui comprend une deuxième alimentation en énergie (EV2) indépendante de la première alimentation en énergie (EV1) et une deuxième unité d'évaluation et de commande (24) pour la génération de pression redondante dans le premier circuit de freinage (BKV) et qui est associé à un premier essieu (VA) doté d'au moins deux freins de roue (RB1, RB2), le premier circuit de freinage (BVK) comprenant un premier générateur de pression (12) associé au système principal (10), un deuxième générateur de pression (22) associé au système secondaire (20) qui sont connectés hydrauliquement en série entre un premier récipient de fluide (7V) et les au moins deux freins de roue (RB1, RB2) du premier axe (VA), et une première unité de modulation (16V) pour le raccordement hydraulique des générateurs de pression (12, 22) auxdits au moins deux freins de roue (RB1, RB2) et pour la modulation de pression de freinage individuelle dans les au moins deux freins de roue (RB1, RB2), un deuxième sous-système de freinage (SubH) comprenant un deuxième circuit de freinage (BKH) et un système auxiliaire (30) qui présente une troisième alimentation en énergie (EV3) et une troisième unité d'évaluation et de commande (34) pour la génération de pression dans le deuxième circuit de freinage (BKH) et est associé à un deuxième essieu (VA) doté d'au moins deux freins de roue (RB3, RB4), le deuxième circuit de freinage (BKH) comprenant un troisième générateur de pression (32) associé au système auxiliaire (30) et qui est disposé entre un deuxième récipient de fluide (7H) et les au moins deux freins de roue (RB3, RB4) du deuxième essieu (HA), et une deuxième unité de modulation (16H) pour le raccordement hydraulique du générateur de pression (32) auxdits au moins deux freins de roue (RB3, RB4) et pour la modulation de pression de freinage individuelle dans les au moins deux freins de roue (RB3, RB4).

2. Système de freinage (1) selon la revendication 1, **caractérisé en ce que** la première unité de modulation (16V) et/ou la deuxième unité de modulation (16H) comprend/comprennent pour chacun des freins de roue (RB1, RB2, RB3, RB4) associés pour la modulation de pression de freinage individuelle respectivement une soupape d'admission (IV1, IV2, IV3, IV4) et respectivement une soupape d'évacuation (OV1, OV2, OV3, OV4).

3. Système de freinage (1) selon la revendication 2, **caractérisé en ce que** le premier sous-système de freinage (SubV) et/ou le deuxième sous-système de freinage (SubH) est/sont réalisé(s) sous la forme de systèmes hydrauliquement ouverts, un premier chemin de décompression (9V) dans le premier sous-système de freinage (SubV) reliant au premier récipient de fluide (7V) les soupapes d'évacuation (OV1, OV2) des freins de roue (RB1, RB2) associés du premier essieu (VA), et un deuxième chemin de décompression (9H) dans le deuxième sous-système de freinage (SubH) reliant au deuxième récipient de fluide (7H) les soupapes d'évacuation (OV3, OV4) des freins de roue (RB3, RB4) associés du deuxième essieu (HA).

4. Système de freinage (1) selon l'une quelconque des revendications 1 à 3, **caractérisé en ce que** dans le premier circuit de freinage (BKVA, BKVC), après le premier récipient de fluide (7V), d'abord le premier générateur de pression (12) et ensuite le deuxième générateur de pression (22) sont disposés.

5. Système de freinage (1) selon l'une quelconque des revendications 1 à 3, **caractérisé en ce que** dans le premier circuit de freinage (BKVB, BKVD), après le premier récipient de fluide (7), d'abord le deuxième générateur de pression (22) et ensuite le premier générateur de pression (12) sont disposés.

6. Système de freinage (1) selon l'une quelconque des revendications 1 à 5, **caractérisé en ce que** les générateurs de pression (12, 22, 32) sont respectivement réalisés sous la forme d'un système de plongeur (12A, 22A, 32A) ou d'un système de pompage (22B) ou d'un système de pompage à accumulateur de pression ou d'actionneurs électrohydrauliques.

7. Système de freinage (1) selon la revendication 6, **caractérisé en ce que** le premier générateur de pression (12) du système principal (10) est réalisé sous la forme d'un premier système de plongeur (12A), et le deuxième générateur de pression (22) est réalisé sous la forme d'un deuxième système de plongeur (22A) ou d'un système de pompage (22B), et le troisième générateur de pression (32) du système auxiliaire (30) est réalisé sous la forme d'un troisième système de plongeur (32A).

8. Système de freinage (1) selon la revendication 7, **caractérisé en ce que** le premier circuit de freinage (BKV) présente pour le premier système de plongeur (12A) une soupape d'arrêt (RVP) qui permet une recharge de fluide de frein à partir du premier récipient de fluide (7V), le deuxième circuit de freinage (BKH) présentant pour le deuxième système de plongeur (32A) une soupape d'arrêt (RVP) qui permet une recharge de fluide de frein à partir du deuxième récipient de fluide (7H).

9. Système de freinage (1) selon la revendication 7 ou 8, **caractérisé en ce que** le premier circuit de freinage (BKV) présente pour le premier système de plongeur (12A) une conduite d'aspiration à clapet antiretour (18) qui raccorde hydrauliquement le premier système de plongeur (12) en plus au premier récipient de fluide (7V), le deuxième circuit de freinage (BKH) présentant pour le deuxième système de plongeur (32A) une conduite d'aspiration à clapet antiretour (38) qui raccorde hydrauliquement le troisième système de plongeur (12) en plus au deuxième récipient de fluide (7V) .

10. Système de freinage (1) selon l'une quelconque des revendications 7 à 9, **caractérisé en ce que** le premier circuit de freinage (BKV) pour le système de pompage (22B) présente une soupape de maintien et de régulation de pression (PRV) qui est associée au système secondaire (20) et est pilotée par la deuxième unité d'évaluation et de commande (24) et est alimentée en énergie par la deuxième alimentation en énergie (EV2).

11. Système de freinage (1) selon la revendication 10, **caractérisé en ce que** le premier circuit de freinage (BKV) présente pour le système de pompage (22B) une conduite d'aspiration à clapet antiretour (28) qui raccorde hydrauliquement le système de pompage (22B) en plus au premier récipient de fluide (7V).

12. Système de freinage (1) selon l'une quelconque des revendications 1 à 11, **caractérisé en ce que** les unités d'évaluation et de commande (14, 24, 34) des sous-systèmes de freinage (SubV, SubH) communiquent entre elles par un système de bus,
la première et la deuxième unité d'évaluation et de commande (14, 24) du premier sous-système de freinage (SubV) étant mises en œuvre en tant que maîtres, et la troisième unité d'évaluation et de commande (34) du deuxième sous-système de freinage (SubH) étant mise en œuvre en tant qu'esclave.

13. Système de freinage (1) selon l'une quelconque des revendications 1 à 12, **caractérisé en ce que** des composants de la première unité de modulation (16V) pour la modulation de pression de frein individuelle sont associés au système principal (10) de sorte que ces composants de l'unité hydraulique (16) et le premier générateur de pression (12) sont pilotés par la première unité d'évaluation et de commande (14) et sont alimentés en énergie par la première alimentation en énergie (EV1).

14. Système de freinage (1) selon l'une quelconque des revendications 1 à 13, **caractérisé en ce que** des composants de la deuxième unité de modulation (16H) pour la modulation de pression de frein individuelle sont associés au système auxiliaire (30) de sorte que ces composants de la deuxième unité de modulation (16H) et le troisième générateur de pression (32) sont pilotés par la troisième unité d'évaluation et de commande (34) et sont alimentés en énergie par la troisième alimentation en énergie (EV3).

15. Système de freinage (1) selon l'une quelconque des revendications 1 à 14, **caractérisé en ce que** le premier essieu (VA) est un essieu avant et le deuxième essieu (HA) est un essieu arrière du véhicule.
